# EUROPEAN PATENT APPLICATION

(11) **EP 4 660 767 A1**
(43) Date of publication of application: **10.12.2025**
(21) Application number: 24766333.9
(22) Date of filing: 29.02.2024
(51) Int. Cl.: G06F 3/04817

(54) **PROCESSING METHOD AND SYSTEM FOR DISPLAYING COMPLETE MAP BOUNDARY AND RELATED APPARATUS**

(30) Priority: 08.03.2023 CN 202310254870
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Jianlin, Shenzhen, Guangdong 518000 (CN)
(74) Representative: Huang, Liwei
(86) International application number: PCT/CN2024/079334
(87) International publication number: WO 2024/183611

(57) **Abstract**

Provided are a processing method and system for displaying a complete map boundary and related apparatus. In the method, a window interface displays a target map area and the map boundary drawn thereon. Specifically, the method includes determining the coordinate mapping relation between the target map area and the window interface; acquiring the reference screen coordinate point of the mowing device on the interface; acquiring the screen boundary coordinate set of the interface; determining position relations between the reference screen coordinate point and the screen boundary coordinate set; and finally generating window adjustment instruction accordingly. In this way, when the mowing device icon touches a window boundary, the window display will be adjusted for adaptively tracking the trajectory of the mowing device and completely displaying the map boundary, thus helping users monitor the mowing device in real time when drawing the target map, and simplifying the control during map drawing.

## Description

The present application claims the benefit of priority to Chinese Patent Application No. 2023102548700, filed with the China National Intellectual Property Administration on March 08, 2023 and entitled "PROCESSING METHOD AND SYSTEM FOR DISPLAYING COMPLETE MAP BOUNDARY AND RELATED APPARATUS", the disclosures of which are incorporated herein by reference in their entireties.

### TECHNICAL FIELD

The present disclosure relates to the field of display technology, and specifically relates to a processing method and system for completely displaying a map boundary and related apparatus.

### BACKGROUND

At present, when a map area to be drawn is larger than the map window range of an app, existing apps for setting job tasks based on maps generally use real-time tracking of the device icon, initially display a large window range enough to fully display the planned task area, allow users to manually adjust the display range of the window, or adjust the display range at regular intervals.

However, display methods of the prior art can only solve specific problems, but cannot ensure that a complete drawn map boundary is displayed in real time during the tracking of the device icon.

### SUMMARY

Embodiments of the present disclosure provide a processing method and system for displaying a complete map boundary and related apparatus, to adaptively track the operation trajectory of the mowing device and completely display the operation trajectory.

In a first aspect, the embodiments of the present disclosure provide a processing method for completely displaying a map boundary; specifically, in the processing method, a window interface of an electronic device displays a target map area in a mowing map, and the map boundary drawn by a mowing device on the target map area. The method comprises:
determining a coordinate mapping relationship between the target map area and the window interface;
acquiring reference screen coordinates of the mowing device on the window interface;
acquiring a screen boundary coordinate set of the window interface;
determining a position relationship between the reference screen coordinates and the screen boundary coordinate set; and
generating a window adjustment instruction based on the position relationship, to completely display the map boundary on the window interface.

In a second aspect, the embodiments of the present disclosure provide a processing system for completely displaying a map boundary; specifically, in the processing method, a window interface of an electronic device displays a target map area in a mowing map, and the map boundary drawn by a mowing device on the target map area. The system comprises:
a first determination unit is configured to determine the coordinate mapping relationship between the target map area and the window interface;
an acquisition unit is configured to acquire reference screen coordinates of a mowing device on the window interface and a screen boundary coordinates of the window interface;
a second determination unit is configured to determine a position relationship between the reference screen coordinates and the screen boundary coordinate set; and
a processing unit is configured to generate a window adjustment instruction according to the position relationship, to completely display the map boundary on the window interface.

In a third aspect, the embodiments of the present disclosure provide an electronic device, including a processor, a memory, a communication interface, and one or more programs stored in the memory and configured to be executed by the processor. The program includes instructions for executing steps of any one of aspects from the first aspect to the second aspect of the embodiments of the present disclosure.

In a fourth aspect, the embodiments of the present disclosure provide a non-transitory computer storage medium storing a computer program for electronic data exchange; specifically, the computer program makes a computer perform part or all of the steps as described in any of aspects from the first aspect to the second aspect of the embodiments of the present disclosure.

It can be seen that in the embodiments of the present disclosure, when a position relationship between the reference screen coordinates of the mowing device on the window interface and the screen boundary coordinate of the window interface is acquired, the display of the operation trajectory of the mowing device on the window interface can be adjusted in time according to the position relation, to ensure that the operation trajectory of the mowing device can be completely displayed on the window interface, thus helping users monitor the situation of the mowing device in real time when drawing the target map, and simplifying the difficulty when users control the mowing device during map drawing.

### BRIEF DESCRIPTION OF DRAWINGS

In order to more clearly illustrate technical solutions in the embodiments of the present disclosure or in the prior art, drawings required for descriptions of the embodiments or the prior art are briefly introduced below. It should be understood that the drawings described below are merely some embodiments of the present disclosure, and that other drawings may also be derived by a person of ordinary skill in the art without creative efforts based on these drawings.
FIG. 1a is a schematic diagram illustrating the structure of an electronic device according to an embodiment of the present disclosure;
FIG. 1b is a schematic diagram illustrating the structure of a mowing system according to an embodiment of the present disclosure;
FIG. 2a is a flow chart of a processing method for displaying a complete map boundary according to an embodiment of the present disclosure;
FIG. 2b is a schematic diagram illustrating a coordinate mapping relation according to an embodiment of the present disclosure;
FIG. 2c is a schematic diagram illustrating a display adjustment process according to an embodiment of the present disclosure; and
FIG. 3 is a schematic diagram illustrating the structure of a processing system for displaying a complete map boundary according to an embodiment of the present disclosure.

### DETAILED DESCRIPTION OF THE EMBODIMENTS

In order to enable a person skilled in the art to better understand the solutions of the present disclosure, the technical solutions in the embodiments of the present disclosure will be clearly and completely described below with reference to drawings. It is evident that the embodiments described are merely part of the embodiments of the present disclosure, rather than all embodiments. All other embodiments derived by a person of ordinary skill in the art based on the embodiments of the present disclosure without creative efforts shall fall within the scope of protection of the present disclosure.

The terms "first", "second" and the like in the specification, claims, and above-mentioned drawings of the present disclosure are used to distinguish different objects, and are not intended to indicate a particular order. In addition, the terms "comprising", "having", and any variations thereof are intended to cover a non-exclusive inclusion. For example, a process, method, system, product or device including a series of steps or units is not limited to only those steps or units that are expressly listed, but optionally further includes steps or units that are not listed, or optionally further includes other steps or units inherent to the process, method, system, product or device.

Reference herein to the term "embodiment" means that a specific feature, structure or characteristic described with respect to an embodiment may be included in at least one embodiment of the present disclosure. The appearance of the phrase at various places in the specification does not necessarily refer to the same embodiment, nor is it necessarily mutually exclusive with other embodiments as a separate or alternative embodiment. It is explicitly and implicitly understood by the person skilled in the art that the embodiments described herein can be combined with other embodiments.

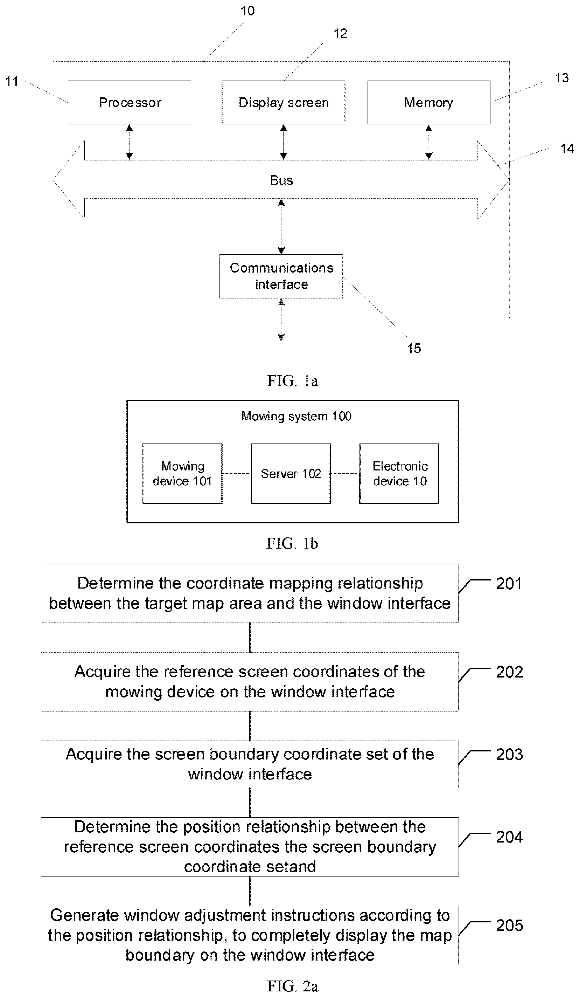

As shown in FIG. 1a, an electronic device 10 is provided according to the present disclosure; specifically, the electronic device 10 includes at least one processor 11, a display screen 12, and a memory 13, and may also include a communication interface 15 and a bus 14. The processor 11, the display screen 12, the memory 13, and the communication interface 15 can communicate with each other via the bus 14. The display screen 12 is configured to display a preset user guide interface in an initial setup mode. The communication interface 15 can transmit information. The processor 11 can invoke logic instructions in the memory 13 to execute the method for displaying a complete map boundary according to the embodiment methods of the present disclosure.

Specifically, in some embodiment methods, as shown in FIG. 1b, the electronic device can be applied to a mowing system 100, and the mowing system 100 may comprises a server 102, a mowing device 101, and an electronic device 10 according to an embodiment method of the present disclosure; the mowing device 101 is configured to perform mowing operations; the display screen of the electronic device 10 comprises a window interface for displaying a mowing map, and for tracking and displaying the real-time position and mowing path of the mowing device 101 on the mowing map; and the server 102 is used to acquire a first data uploaded by the mowing device 101 and a second data uploaded by the electronic device 10, and perform corresponding processing operations according to the specific content of the first data and the second data, including computing, receiving, sending, and storing. The present disclosure is not limited thereto.

Specifically, the electronic device 10 may be a mobile terminal or a fixed terminal; the mobile terminal may be a mobile phone, a tablet, and the like; and the fixed terminal may be a desktop computer or a specific monitoring device. The present disclosure is not limited thereto. The electronic device 10 can further be used to input mowing operation data; and the mowing operation data can also be input via other terminal devices. The present disclosure is not limited thereto.

Alternatively, the electronic device 10 may be a mobile electronic device, an electronic device, or other devices. The present disclosure is not limited thereto.

In addition, the logic instructions in the above-mentioned memory 13 can be stored in a non-transitory computer-readable storage medium, when the logic instructions may be implemented in a form of software functional unit and sold or used as an independent product.

The memory 13, as a non-transitory computer-readable storage medium, can be configured to store software programs and computer executable programs, such as a program instruction or module corresponding to a method according to an embodiment of the present disclosure. The processor 11 executes a functional disclosure and data processing by running a software program, an instruction or a module stored in a memory 13, thereby implementing a method in the above-mentioned embodiment.

The memory 13 can include a program storage area and a data storage area, where the program storage area can store an operating system, and an disclosure program required for at least one function; and the data storage area can store data and the like generated according to a use of an electronic device 10. In addition, the memory 13 can include a high-speed random access memory and can further include a non-volatile memory. For example, the memory can be various media capable of storing a program code, such as a USB flash drive, a mobile hard disk, a read-only memory (ROM), a random access memory (RAM), a magnetic disk, or an optical disk, and can also be transient storage media.

A specific method is described in detail below.

Please refer to FIGS. 2a-2c. FIG. 2a is a flow chart of a processing method for completely displaying a map boundary according to an embodiment of the present disclosure. In the processing method, the window interface 22 of the electronic device 10 displays the target map area 23 in the mowing map 21, and the map boundary 221 drawn by the mowing device on the target map area 23; specifically, the window interface 22 is the display interface of the screen of the electronic device 10, and the target map area 23 refers to a partial area of the mowing map 21 currently displayed in the window interface 22. The method comprises the following steps:

Step 201, determining the coordinate mapping relationship between the target map area 23 and the window interface 22.

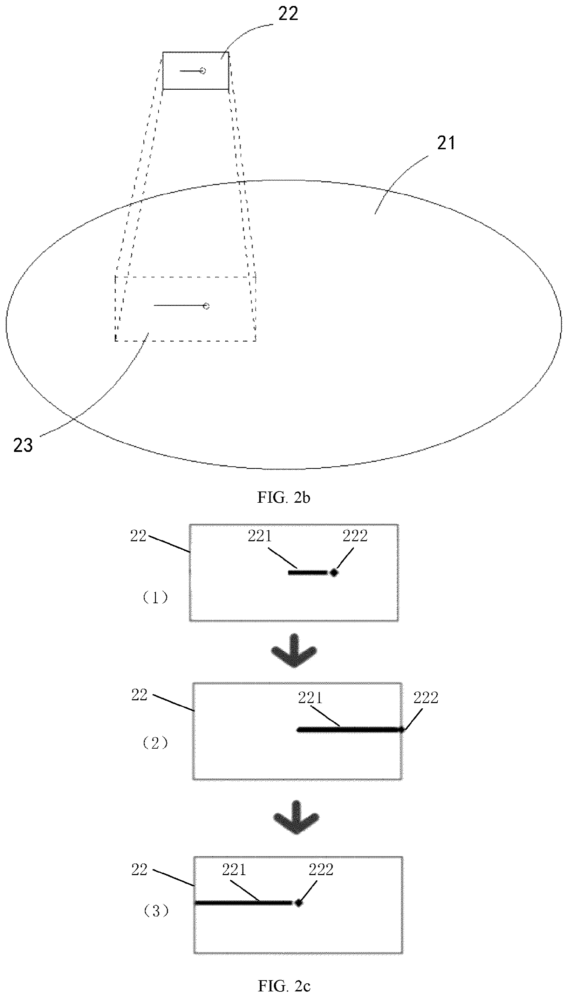

In one possible embodiment, please refer to FIG. 2b for details, the determining the coordinate mapping relationship between the target map area 23 and the window interface 22 comprises: acquiring a first coordinate set of the target map area 23; acquiring a second coordinate set of the window interface 22; acquiring the current display ratio of the window interface 22; and determining a current coordinate mapping relationship between the first coordinate set and the second coordinate set according to the display ratio; specifically the second coordinate set includes a screen boundary coordinate set.

In a specific embodiment, the electronic device 10 displays a partial area of the mowing map 21 on the window interface 22, that is, the target map area 23; specifically the target map area 23 is displayed according to the coordinate mapping relationship. Firstly, a first coordinate set of all the coordinates of the target map area 23 and a second coordinate set of all the coordinates of the window interface 22 are acquired. Then, the display ratio of the target area displayed by the current window interface 22 is determined, and a correlation between the first coordinate set and the second coordinate set under the display ratio is established to obtain a coordinate mapping relationship. In addition, when the display ratio changes, the coordinate mapping relationship under the changed display ratio is re-established by using the above-mentioned method.

It can be seen that in this embodiment, the mapping relationship between map coordinates and screen coordinates is established based on the display ratio, and the data processing efficiency of subsequent display processing of the electronic device 10 can be improved according to the coordinate mapping relation.

Step 202, acquiring the reference screen coordinates of the mowing device on the window interface 22.

Specifically, the reference screen coordinates is configured to indicate the physical coordinates of the mowing device on the screen.

In one possible embodiment, the acquiring the reference screen coordinates of the mowing device on the window interface 22 comprises: acquiring the real-time coordinates of the mowing device; and determining the reference screen coordinates corresponding to the real-time coordinates according to the coordinate mapping relationship.

For example, the real-time coordinates is the map coordinates of the mowing device on the mowing map 21.

Specifically, after the coordinate mapping relationship is determined, it is necessary to acquire the real-time coordinates of the mowing device on the mowing map 21 according to a positioning mechanism. Then, the reference screen coordinates corresponding to the real-time coordinates is determined according to the coordinate mapping relationship. For example, after the display ratio is changed from 1:1 to 1:2, the mapping of one map coordinate to one screen coordinate is changed to two map coordinates mapping to one screen coordinate. That is, the RGB data displayed for one screen coordinate in window interface 22 in target map area 23 corresponds to the total RGB data of two map coordinates. When the real-time coordinates of the mowing device is obtained, the screen coordinates associated with the real-time coordinates is directly queried according to the coordinate mapping relationship, and then the screen coordinates corresponding to the real-time coordinate point is determined as the first screen reference coordinates.

It can be seen that in this embodiment, the reference screen coordinate point of the mowing device is determined according to the real-time coordinates and the coordinate mapping relationship.

Step 203, acquiring the screen boundary coordinate set of the window interface 22.

Step 204, determine position relations between the reference screen coordinates and the screen boundary coordinate set.

Specifically, the screen boundary coordinate set includes a plurality of screen boundary coordinate points.

In a specific implementation, after the reference screen coordinates of the mowing device on the electronic device 10 is determined, the reference screen coordinates is compared with the plurality of screen boundary coordinates. If one of the plurality of screen boundary coordinates is consistent with the reference screen coordinates, it is determined that an overlapping relationship exists between the reference screen coordinates and a window boundary of the window interface 22. If one of the plurality of screen boundary coordinates is consistent with the reference screen coordinates, it is determined that no overlapping relationship exists between the reference screen coordinates and the window boundaries of the window interface 22.

Step 205, generating a window adjustment instruction according to the position relationship, to completely display the map boundary 221 on the window interface 22.

Please refer to Figure 2c for details. States (1) to (3) illustrates a dynamic process that the mowing device icon 222 draws a map boundary 221 on the window interface 22. Specifically, state (1) is the state when the mowing device is tracked normally, and the display adjustment mechanism in the processing method according to the embodiments of the present disclosure is not triggered; state (2) is the state when the mowing device icon 222 has moved to a first window boundary of the window interface 22, and the display adjustment mechanism in the processing method according to the embodiments of the present disclosure will be triggered; and state (3) is the specific state of the map boundary 221 and the mowing device icon 222 after the display adjustment is completed.

Specifically, position relationship include an overlapping relationship; the generating the window adjustment instruction according to the position relationship includes: generating a panning instruction and/or a zoom instruction if an overlapping relationship exists between the reference screen coordinate point and any screen boundary coordinate point in the screen boundary coordinate set; and generating a maintaining instruction if the reference screen coordinates is within the range defined by the screen boundary coordinate set.

More specifically, the generating a panning instruction and/or a zoom instruction includes: determining a first window boundary with an overlapping relationship on the window interface 22; and generating a panning instruction and/or a zoom instruction according to the first window boundary.

Furthermore, generating the panning instruction and/or the zoom instruction according to the first window boundary comprises: determining whether the distance between the map boundary 221 and a second window boundary is within a first preset range; specifically the second window boundary refers to the window boundary on the window interface 22 and opposite to the first window boundary; if the distance is not within the first preset range, translating the mowing map 21 toward the first window boundary until the distance between the map boundary 221 and the second window boundary is within the first preset range; and if the distance is within the first preset range, zooming the mowing map 21, and translating the zoomed mowing map 21 toward the second window boundary until the distance between the map boundary 221 and the second window boundary is within the first preset range.

In a specific implementation, as shown in FIG. 2c, the window interface 22 includes four window boundaries, which are respectively located at the upper, lower, left and right sides relative to the screen center of the window interface 22, and the first window boundary is any one of the four window boundaries.

When it is determined that the overlapping relationship exists between the reference screen coordinates and the first window boundary, it is determined that the mowing device icon 222 is already on the first window boundary. Therefore, it is necessary to conduct display processing for the mowing device icon 222 and the map boundary 221. Specifically, the processing comprises determining whether the distance between the map boundary 221 and the second window boundary is within the first preset range. When it is determined that the closest distance between the map boundary 221 and the second window boundary is within the first preset range, it is decided that no movable space exists between the map boundary 221 and the second window boundary; therefore, it is necessary to adjust the display scale, that is, to zoom the mowing map 21; therefore, the electronic device 10 generates a zoom instruction, so that the display interface changes the display ratio, thereby zooming in the displayed target area; and finally, the electronic device 10 generates a panning instruction to translate the map boundary 221 toward the second window boundary, to make the closest distance between the map boundary 221 and the second window boundary be within the first preset range. When it is determined that the closest distance between the map boundary 221 and the second window boundary is not within the first preset range, it is decided that a movable space exists between the map boundary 221 and the second window boundary; and then, the electronic device 10 can directly generate a panning instruction to translate the map boundary 221 toward the second window boundary, to make the closest distance between the map boundary 221 and the second window boundary be within the first preset range.

Furthermore, the processing can also include determining whether the closest distance between the map boundary and the second window boundary is greater than or equal to a preset threshold. If the closest distance is greater than the preset threshold, the above-mentioned translation adjustment is performed; and if the closest distance is less than the preset threshold, zooming is required until the closest distance is greater than or equal to the preset threshold, and then translation is performed.

It can be seen that in this embodiment, when the mowing device icon 222 reaches the window boundary, the mowing map is adjusted by zooming or panning, to make enough space for the mowing device in the direction of travel, so that the window goes on tracking and displaying the mowing device icon 222, to achieve adaptively tracking the operation trajectory of the mowing device and completely displaying the operation trajectory.

In a possible embodiment, before determining the coordinate mapping relationship between the target map area 23 and the window interface 22, the method further comprises:
acquiring the initial data for the mowing device from a server; specifically, the initial data include the initial map coordinate point of the mowing device on the mowing map 21 and map parameters of the target map area 23, the map parameters include a map coordinate set and an RGB parameter set of the target map area 23, the map coordinate set includes a plurality of map coordinates, the RGB parameter set includes a plurality of RGB parameters, and the RGB parameters are used to indicate the RGB value corresponding to each map coordinate; acquiring the screen resolution and screen coordinate set of the screen of the electronic device 10; specifically the screen coordinate set includes a plurality of screen coordinate points; determining the mapping relation between the plurality of map coordinate points and the plurality of screen coordinate points according to the initial data, screen resolution and screen coordinate set; and displaying the mowing device and the target map area 23 on the window interface 22 of the electronic device 10 according to the mapping relationship and initial data.

Specifically, the map coordinates of the mowing map 21 is preset in the server, and the electronic device 10 sends a request to the server to acquire the map parameters of the corresponding target map area 23 from the server. The map parameters include but are not limited to the image frame and the map coordinate set of the target map area 23. The image frame includes the RGB parameter set. Therefore, the electronic device 10 can directly acquire the map parameters corresponding to the target map area 23 of the mowing map 21 from the server for display; however, when the target map area 23 is displayed on the screen according to the map parameters, it is necessary to adjust the display ratio correspondingly according to the screen parameters (such as resolution) of the screen, so that it is necessary to determine the mapping relationship between the plurality of map coordinates in the map coordinate set and the plurality of screen coordinate points before displaying. After the mapping relation is determined, the electronic device 10 displays the target map area 23 on the screen, and generates the mowing device icon 222 corresponding to the mowing device on the screen. After the target map area 23 and the mowing device icon 222 are displayed, the real-time positioning information of the mowing device is acquired, the real-time coordinates is obtained from the real-time positioning information, and the mowing device icon 222 is updated at the real-time coordinates in the target map area 23. Then, the first reference screen coordinates corresponding to the real-time coordinates are determined according to the mapping relationship, so that it can be determined which screen coordinates the current mowing device is at, and then it can be decided whether the screen coordinates are at the window boundary. If the screen coordinates are at the window boundary, an adjustments will be made.

In a possible embodiment, when it is determined that the mowing device has completed drawing a map boundary 221 of a target operation area, a jump mark corresponding to the target operation area is generated, and displayed in the target map area 23; specifically, the jump mark is associated with the center point of the target operation area; when users input a trigger instruction for the jump mark, the electronic device 10 sends a jump disclosure to the server, and then receives display parameters of the target operation area sent by the server; specifically, the display parameters include map parameters of the target operation area; and the screen jumps and displays the target operation area according to the display parameters. Alternatively, the screen can also display the target operation area where the mowing operation has been completed and the next first operation area to be drawn at the same time.

It can be seen that in this embodiment, when a plurality of operation areas exist, the screen mainly displays the map boundary 221 of the target operation area being drawn, and at the same time, completed target operation areas can be processed, with the user determining whether to display them, thus enhancing the display flexibility. The electronic device 10 can also adaptively adjust the display range, enabling completed target work areas to be displayed simultaneously with the target work areas currently being worked on, thereby enhancing the intelligence of the electronic device 10.

In summary, in this embodiment, firstly, the method comprises determining the coordinate mapping relationship between the target map area 23 and the window interface 22; then acquiring the reference screen coordinates of the mowing device on the window interface 22; acquiring the screen boundary coordinate set of the window interface 22; determining position relationship between the reference screen coordinates and the screen boundary coordinate set; and finally generating a window adjustment instruction according to the position relationship, to completely display the map boundary 221 on the window interface 22. In this way, the electronic device 10 can completely display the map boundary 221 on the window interface 22.

The above content mainly describes the solutions according to the embodiments of the present disclosure from a perspective of the execution process on the method side. It can be understood that in order to achieve the above-mentioned functions, a mobile electronic device 10 includes hardware structures and/or software modules corresponding to different functions respectively. A person skilled in the art will readily appreciate that the units and algorithm steps of each example described in the embodiments provided herein can be implemented in hardware, or in a combination of hardware and computer software by the present disclosure. Whether a certain function is performed in hardware or through computer software driving the hardware depends on the specific disclosure and design constraints of the technical solution. Professional technicians can adopt different approaches to implement the described functions for each specific disclosure, but such implementations should not be regarded as exceeding the scope of the present disclosure.

In the embodiments of the present disclosure, the electronic device can be divided into functional units according to the above-mentioned method example. For example, each function can correspond to a separate functional unit, and two or more functions can be integrated into one single processing unit. The above-mentioned integrated unit can be implemented in the form of hardware or as software functional units. It should be noted that the division of units according to the embodiments of the present disclosure is illustrative and merely represents a logical function division. In actual implementations, other ways of division can be adopted.

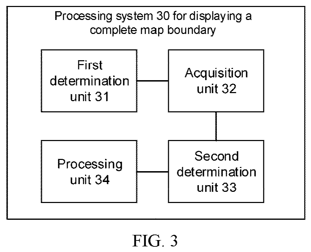

Please refer to FIG. 3. FIG. 3 is a schematic diagram illustrating the structure of a processing system 30 for displaying a complete map boundary according to an embodiment of the present disclosure. The processing system 30 for displaying a complete map boundary includes:
a first determination unit 31, which is configured to determine the coordinate mapping relationship between the target map area and the window interface;
an acquisition unit 32, which is configured to acquire the reference screen coordinates of the mowing device on the window interface and the screen boundary coordinate set of the window interface;
a second determination unit 33, which is configured to determine position relationship between the reference screen coordinates and the screen boundary coordinate set; and
a processing unit 34, which is configured to generate a window adjustment instruction according to the position relations, to completely display the map boundary on the window interface.

It can be seen that in the embodiments of the present disclosure, when a position relationship between the reference screen coordinates of the mowing device on the window interface and the screen boundary coordinates of the window interface is acquired, the display of the operation trajectory of the mowing device on the window interface can be adjusted in time according to the position relationship, to ensure that the operation trajectory of the mowing device can be completely displayed on the window interface, thus helping users monitor the situation of the mowing device in real time when drawing the target map, and simplifying the difficulty when users control the mowing device during map drawing.

In a possible embodiment, in terms of determining the coordinate mapping relationship between the target map area and the window interface, the first determination unit 31 is specifically configured to: acquire a first coordinate set of the target map area; acquire a second coordinate set of the window interface; acquire the current display ratio of the window interface; and determine the current coordinate mapping relation between the first coordinate set and the second coordinate set according to the current display ratio; specifically the second coordinate set includes a screen boundary coordinate set.

In a possible embodiment, in terms of acquiring the reference screen coordinates of the mowing device on the window interface, the acquisition unit 32 is specifically used to: acquire the real-time coordinates of the mowing device; and determine the reference screen coordinates corresponding to the real-time coordinates according to the coordinate mapping relationship.

In a possible embodiment, position relationship include an overlapping relationship; in terms of generating the window adjustment instruction according to the position relationship, the processing unit 34 is specifically configured to: generate a panning instruction and/or a zoom instruction if an overlapping relationship exists between the reference screen coordinates and any screen boundary coordinate in the screen boundary coordinate set; and generate a maintaining instruction if the reference screen coordinates are within the range defined by the screen boundary coordinate set.

In a possible embodiment, in terms of generating a panning instruction and/or a zoom instruction, the processing unit 34 is specifically configured to: determine a first window boundary with an overlapping relationship on the window interface; and generate the panning instruction and/or the zoom instruction according to the first window boundary.

In a possible embodiment, in terms of generating the panning instruction and/or the zoom instruction according to the first window boundary, the processing unit 34 is specifically configured to: determine whether the distance between the map boundary and a second window boundary is within a first preset range; specifically the second window boundary refers to the window boundary on the window interface and opposite to the first window boundary; if the distance is not within the first preset range, panning the mowing map toward the second window boundary until the distance between the map boundary and the second window boundary is within the first preset range; and if the distance is within the first preset range, zooming the mowing map, and panning the zoomed mowing map toward the second window boundary until the distance between the map boundary and the second window boundary is within the first preset range.

The above-mentioned embodiments can be implemented in whole or in part by software, hardware, firmware, or any combination thereof. When implemented in software, the above-mentioned embodiments can be implemented in whole or in part in the form of a computer program product. The computer program product includes one or more computer instructions or computer programs. When the computer instructions or computer programs are loaded or executed on a computer, a process or function described in an embodiment of the present disclosure is generated in whole or in part. The computer can be a general-purpose computer, a special-purpose computer, a computer network, or another programmable apparatus. The computer instructions can be stored in a computer-readable storage medium or transmitted from one computer-readable storage medium to another computer-readable storage medium. For example, the computer instructions can be transmitted, either wired or wirelessly, from one website, computer, server, or data center to another website, computer, server, or data center. The computer-readable storage medium can be any available medium accessible by a computer or a data storage device such as a server or data center that contains one or more collections of available media. The available medium can be a magnetic medium (e.g., a floppy disk, a hard disk, and a magnetic tape), an optical medium (for example, a DVD), or a semiconductor medium. The semiconductor medium can be a solid-state drive.

The embodiments of the present disclosure further provide a computer storage medium; specifically, the computer storage medium stores a computer program for electronic data exchange, and the computer program makes a computer execute part or all of the steps of any method described in the above-mentioned method embodiments, and the computer includes an electronic device 10.

The embodiments of the present disclosure further provide a computer program product, which includes a non-transitory computer-readable storage medium storing a computer program, and the computer program is operable to make a computer execute part or all of the steps of any method described in the above-mentioned method embodiments. The computer program product can be a software installation package, and the above-mentioned computer includes an electronic device 10.

It should be understood that in the embodiments of the present disclosure, the order of the above-mentioned steps does not necessarily indicate the execution order. The execution order of the steps should be determined based on their functions and inherent logic, and should not be construed as imposing any limitation on the implementation of the embodiments of the present disclosure.

It should be understood that the methods, apparatuses, and systems disclosed in several embodiments of the present disclosure can be implemented in other ways. For example, the above-described embodiments of the apparatus are merely illustrative. The division of the units, for instance, is only one logical functional partition, and other division methods can be adopted in actual implementations. For example, multiple units or components can be combined or integrated into another system, or certain features can be omitted or not executed. Another point is that the mutual coupling or direct coupling or communication connection shown or discussed can be through some interfaces, and indirect coupling or communication connection between apparatuses or units can be electrical, mechanical, or implemented in other forms.

The units described as separate components can or cannot be physically separate, and the components shown as units can or cannot be physical units, that is, they may be located in one place or distributed across multiple network units. Some or all of the units can be selected as needed to achieve the objectives of this embodiment.

In addition, in the embodiments of the present disclosure, the functional units can be integrated into one processing unit, or each unit can be physically separate, or two or more units can be integrated into one unit. The above-mentioned integrated units can be implemented in hardware or in a combination of hardware and software functional units.

The above-mentioned integrated units implemented in the form of software functional units can be stored in a computer-readable storage medium. The above-mentioned software functional units are stored in a storage medium and include several instructions configured to make a computer device (which may be a personal computer, server, or network device) execute part of the steps of the methods described in the embodiments of the present disclosure. The storage medium includes a USB flash drive, a portable hard disk, a magnetic disk, an optical disc, a volatile memory, or a non-volatile memory. The non-volatile memory can be a read-only memory (ROM), a programmable ROM (PROM), an erasable PROM (EPROM), an electrically EPROM (EEPROM), or a flash memory. The volatile memory can be a random access memory (RAM), which is used as an external high-speed cache. By way of example but not limitation, many forms of random access memory (RAM) are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). Various other media capable of storing program codes can also be used.

The present disclosure has been disclosed by way of embodiments, and is not to be construed as being limited thereto. Any person skilled in the art can readily make variations or substitutions without departing from the spirit and scope of the present disclosure, and can make various changes and modifications, including combinations of the above-mentioned different functions and implementation steps, as well as implementations in software, hardware, or a combination thereof. All such modifications fall within the scope of protection of the present disclosure.

## Claims

1. A processing method for completely displaying a map boundary , wherein the processing method comprising, displays a target map area in a mowing map via a window interface of an electronic device, and displays the map boundary drawn by a mowing device on the target map area,
determining a coordinate mapping relationship between the target map area and the window interface;
acquiring reference screen coordinates of the mowing device on the window interface;
acquiring a screen boundary coordinate set of the window interface;
determining a position relationship between the reference screen coordinates and the screen boundary coordinate set; and
generating a window adjustment instruction based on the position relationship, so as to completely display the map boundary on the window interface.

2. The processing method according to claim 1, wherein the determining the coordinate mapping relationship between the target map area and the window interface comprises:
acquiring a first coordinate set of the target map area;
acquiring a second coordinate set of the window interface;
acquiring a current display ratio of the window interface; and
determining a current coordinate mapping relationship between the first coordinate set and the second coordinate set according to the current display ratio, wherein the second coordinate set includes the screen boundary coordinate set.

3. The processing method according to claim 1, wherein the acquiring the reference screen coordinates of the mowing device on the window interface comprises:
acquiring real-time coordinates of the mowing device; and
determining reference screen coordinates corresponding to the real-time coordinates according to the coordinate mapping relationship.

4. The processing method according to claim 1, wherein the position relationship comprise an overlapping relationship between the reference screen coordinates and any screen boundary coordinate in the screen boundary coordinate set, or the reference screen coordinates fall within a range defined by the screen boundary coordinate set; and
the generating the window adjustment instruction according to the position relationship comprises:
generating a panning instruction and/or a zoom instruction when an overlapping relationship exists between the reference screen coordinates and any screen boundary coordinate in the screen boundary coordinate set.
generating a maintaining instruction when the reference screen coordinates fall within the range defined by the screen boundary coordinate set.

5. The processing method according to claim 4, wherein the generating the panning instruction and/or zoom instruction comprises:
determining a first window boundary on the window interface where the overlapping relationship exists; and
generating the panning instruction and/or zoom instruction according to the first window boundary.

6. The processing method according to claim 5, wherein the generating the panning instruction and/or zoom instruction according to the first window boundary comprises:
determining whether a distance between the map boundary and a second window boundary is within a first preset range, wherein the second window boundary refers to a window boundary on the window interface and is opposite to the first window boundary;
when the distance is not within a first preset range, panning the mowing map toward the second window boundary until the distance is within the first preset range; and
zooming the mowing map when the distance is within the first preset range, and panning the zoomed mowing map toward the second window boundary until the distance is within the first preset range.

7. A processing system for completely displaying a map boundary, wherein the processing system comprises:
a first determination unit is configured to determine the coordinate mapping relationship between the target map area and the window interface;
an acquisition unit is configured to acquire reference screen coordinates of a mowing device on the window interface and a screen boundary coordinate set of the window interface;
a second determination unit is configured to determine a position relationship between the reference screen coordinates and the screen boundary coordinate set; and
a processing unit is configured to generate a window adjustment instruction according to the position relationship, so as to completely display the map boundary on the window interface.

8. An electronic device, comprising a processor, a memory, a communication interface, and one or more programs stored in the memory and configured to be executed by the processor, wherein the one or more programs comprise instructions for executing the steps of the method according to any one of claims 1 to 6.

9. A non-transitory computer-readable storage medium, which stores a computer program for electronic data exchange, wherein the computer program causes a computer to perform instructions of steps of the method according to any one of claims 1 to 6.
